# EUROPEAN PATENT APPLICATION

(11) **EP 1 484 715 A2**
(43) Date of publication of application: **08.12.2004**
(21) Application number: 04252974.3
(22) Date of filing: 20.05.2004
(51) Int. Cl.: G06K 19/077, G06K 19/07

(54) **Smart card**

(30) Priority: 02.06.2003 US 449019
(71) Applicant: Endicott Interconnect Technologies, Inc., Endicott, New York 13760 (US)
(72) Inventor: Bhatt, Ashwinkumar, Endicott, New York 13760 (US); McNamara, James J., Jr., Vestal, New York 13850 (US); Fuller, James W., Jr., Endicott, New York 13760 (US); Wike, william, Endicott, New York 13760 (US)
(74) Representative: Tothill, John Paul

(57) **Abstract**

An electronic card (13) which includes a thin body portion (15, 15'), a storage device (19) (e.g., semiconductor chip) and an antenna (21). In another embodiment, the card (13) includes the body portion, the antenna (21), and a recording device (e.g., magnetic stripe).

## Description

This invention relates to electronic cards, and particularly those of the credit card size providing a variety of functions to be defined hereinbelow.

There are presently two different types of electronic cards such as those mentioned above known today. One example is a magnetic strip card typically comprised of a plastic or the like medium having a magnetic recording medium attached thereto. One example is a bank cash card or credit card and another example is a prepaid coupon-type card such as a phone card or subway token. Typically, the magnetic strip on the card's external surface contains information which is stored magnetically in the manner of a magnetic recording tape. The information on the strip is read by manually moving the card through a slot in a reader containing a read head which develops an electronic signal as the magnetic strip is moved past it. Complex readers are, of course, available such as those contained in automatic teller machines (ATMs) placed for convenience at banks and elsewhere.

A second form of electronic card is referred to as a "smart card". In such a card, there is an integrated circuit (semiconductor) chip installed within the card body capable of storing and providing literally millions of bits of information. Because of the ability of these cards to store and supply such larger quantities of information, smart cards are becoming associated with much broader fields of use than the aforementioned relatively simple interface medium for a magnetic strip credit or banking card. By way of example, such smart cards have been developed by automobile manufacturers to aid in manufacture of each automobile in an assembly line. As the automobile moves along the line, the smart card provides information to the various robotic units performing the actual assembly work. A typical smart card comprises a random access memory (RAM), a read only memory (ROM), a central processing unit, and a nonvolatile memory for storing the described information. The smart card contains digital logic connected to the card's memory, an internal power supply and a radio frequency transmitter which in turn is connected to an antenna.

Examples of cards of the above types are shown and described in the following US Letters Patents:

| | |
|---|---|
| US 3,383,657 | Claassen et al |
| US 3,399,473 | Jaffe |
| US 3,637,994 | Ellingboe |
| US 3,762,081 | Armbruster et al |
| US 4,202,120 | Engel |
| US 4,507,550 | Fleer |
| US 4,582,985 | Löfberg |
| US 4,916,296 | Streck |
| US 5,397,881 | Mannik |
| US 5,459,304 | Eisenmann |
| US 5,574,270 | Steffen |
| US 5,777,903 | Piosenka et al |
| US 6,012,634 | Brogan et al |
| US 6,328,210 B1 | Kim et al |
| US 6,501,962 B1 | Green |
| WO 95/27955 | Hummerston et al |

While the above cards are shown to provide various individual capabilities, such capabilities are limited. As will be defined below, a primary feature of the preferred embodiments of the present invention is the ability to provide a multitude of desirable functions in a single electronic card of compact, thin construction which is thus readily usable by a consumer.

It is believed that such an electronic card will represent a significant advancement in the art.

It is, therefore, a primary object of the present invention to enhance the art of electronic cards.
It is another object of the present invention to provide an electronic card capable of providing a multitude of different functions in a compact, thin structure.

It is yet another object of the invention to provide such a card which can be readily manufactured in a facile manner and without excessive cost.

According to one aspect of the invention there is provided an electronic card comprising a thin body portion including a first external surface, a storage device located substantially within the body portion, and an antenna located on the first external surface or substantially within the body portion.

According to another aspect of the invention, there is provided an electronic card comprising a thin body portion including a first external surface, a recording device located substantially within the body portion, and an antenna located on the first external surface or substantially within the body portion.

Preferred embodiments of the invention will now be described, by way of example only, with reference to the accompanying drawings, in which:
FIG. 1 is an exploded, perspective view of an electronic card in accordance with one embodiment of the invention;
FIG. 2 is a perspective view of one side of the card of FIG. 1, as assembled;
FIG. 3 is a view from the opposing side of the card shown in FIG. 2, also in perspective;
FIG. 4 is a plan view of the electronic card of FIG. 1, showing various sectional lines taken therethrough;
FIG. 5 is a much enlarged, sectional elevational view of the card of FIG. 4, as taken along the line A-A in FIG. 4;
FIG. 6 is a much enlarged, side elevational view, in section, of the card of FIG. 4, as taken along the line B-B in FIG. 4;
FIG. 7 is a much enlarged, side elevational view, in section, of the card of FIG. 4, as taken along the line C-C in FIG. 4;
FIG. 8 is a much enlarged, side elevational view, in section, of the card of FIG. 4, as taken along the line D-D in FIG. 4;

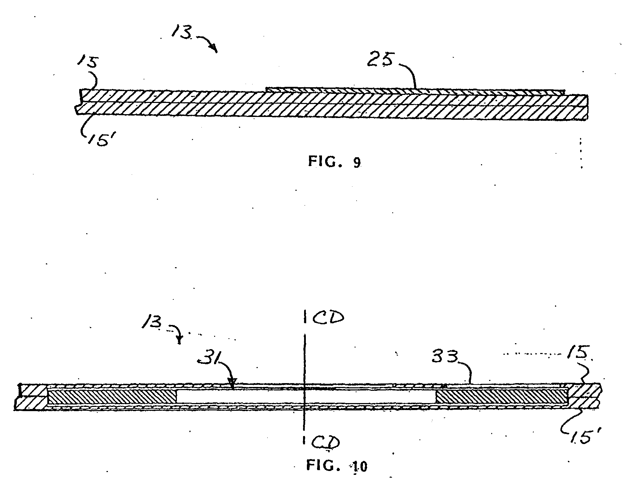

FIG. 9 is a much enlarged, side elevational view of the card of FIG. 4 as taken along the line E-E in FIG. 4; and
FIG. 10 is a much enlarged, side elevational view, in section, of the card of FIG. 4, as taken along the line F-F in FIG. 4.

The sectioning provided in the above figures is not meant to indicate a particular material but only the presence of the structures defined herein. The various materials of these structures will be provided in greater detail hereinbelow. Accordingly, the sectioning provided is not meant to limit the invention to any particular material or to indicate similarity of one component in one FIG. to that in another having the same cross-sectional lines.

For a better understanding of the present invention, together with other and further objects, advantages and capabilities thereof, reference is made to the following disclosure and appended claims in connection with the above-described drawings. It is understood that like numerals will be used to indicate like elements from FIG. to FIG.

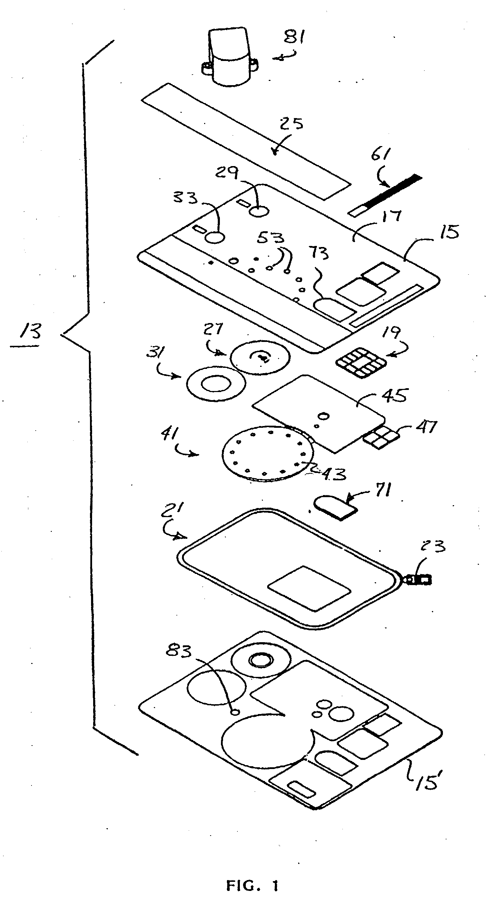

In FIG. 1 there is shown an exploded perspective view of an electronic card 13 according to one embodiment of the invention. Card 13, as stated, is capable of providing a multitude of different operations for the card user heretofore not found in any single card of this type. Card 13 includes a two-part body portion 15 and 15' which mates together to form a singular, integral body portion having therein or thereon the various components defined herein. A preferred material for both body portions 15 and 15' is PVC, while other materials such as polycarbonate, nylon, Lexan, etc. are also permissible. (Lexan is a trademark of the General Electric Company.)

According to one embodiment, card 13 includes the defined two-part body portion, having at least one external surface 17 and a storage device 19 included substantially within the body portion (as also seen below). In a preferred embodiment, storage device 19 is a smart chip and is used to store data, such as may be used if card 13 is used in an electronic structure such as a television receiver (e.g., Direct TV) which receives signals (e.g., from a satellite) and thereafter generates signals from these to allow effective operation of the electronic structure. The card of the present invention is thus able to provide this capability, in addition to the many others addressed below. In one example, chip 19 may have a capacity of from about 250 bytes to about 2,000 bytes.

Still further, the card containing this storage device further includes an antenna 21 which is either embedded within the body portion (between layers 15 and 15') or, alternatively, located on an external surface (i.e., surface 17) of portion 15. Power for the antenna is provided by a semiconductor chip 23 coupled to an end of the antenna and preferably also embedded within body portion 15 and 15'. In a preferred embodiment, antenna 21 is a copper wire or a plated copper thin layer. Having chip 23 coupled thereto allows card 13 to generate a signal to activate an external device, such as a garage door opener or to unlock an automobile. Other uses are well within the capabilities of one skilled in the art and further explanation is not believed necessary. Antenna 21 may also be a solar antenna designed to receive solar energy and provide input to designated elements of the invention. In one example, chip 23 may also have a capacity of from about 250 bytes to about 2,000 bytes. The antenna may be operable in three different frequency operating ranges: (1) from about 0 to 1 cm at about 140 KHz; (2) up to about one meter at about 10-15 MHz; and (3) up to about 10 meters at about 300 MHz to about 2.5 GHz.

In FIG. 1, card 13 also includes additional components. For example, card 13 also includes a magnetic stripe 25 located across the external surface 17 on the upper lay 15 of the card's two-part body portion. Stripe 25 is preferably comprised of a pattern of ferromagnetic material which is encoded to provide a specific message when read through an appropriate reader, which reader in turn decodes the message. Many card users are familiar with this stripe-form of card, as it is used often in such applications as in supermarkets, major department stores, etc. when serving as a credit or debit card. Further description is thus not believed necessary, other than to state that such a stripe functions as a recording device or the like for card 13. Because of its typically limited capability (e.g., 64K bytes), far greater capabilities are necessary for such an electronic card, which, as stated, are provided by the unique card defined herein.

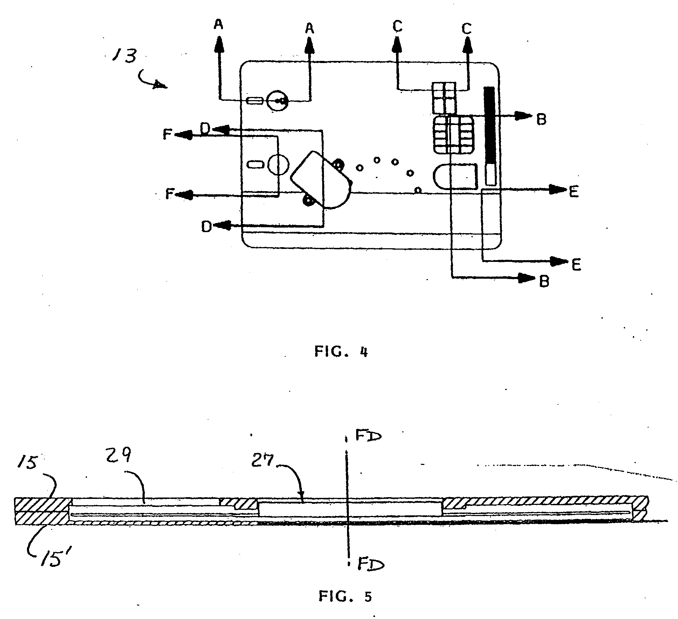

Card 13 also includes a floppy disk 27 which, as seen in the enlarged, cross-sectional view of FIG. 5, rotates about a major axes FB-FB. Reading of the floppy disk is possible through a provided opening 29 in upper part 15 of the invention's body portion. A conventional reader, e.g., that found in a typical personal computer, may perform this function. Drive for disk 27 is also possible by conventional means such as the computer's internal drive. In one example, disk 27 may store up to about 300K bytes of information.

Still further, card 13 includes a miniature CD 31 which, as see in FIG. 10, rotates about an axis CD-CD within the body portion and is capable of being read through a corresponding second opening 33 provided in the upper part 15. Drive and read structures of conventional types, e.g., those in personal computers, may be used to rotate and read the CD. In one example, CD 31 may contain up to about 300K bytes of information.

The floppy disk 27 and CD 31 can be made from conventional materials and further explanation is not deemed necessary. The various drive means for rotating each of these structures, as indicated, may be provided within a corresponding electronic assembly (e.g., a personal computer) in which card 13 may be positioned. Such drive mechanisms are well known and further description is not believed necessary.

In one example, floppy disk 27 may include an external diameter of only about 0.750 inch and the adjacent CD an external diameter also of only about 0.750 inch. It is understood that these dimensions are significantly smaller than those of conventional CDs and floppy disks but are attainable using current technology and thus readily usable in the present invention.

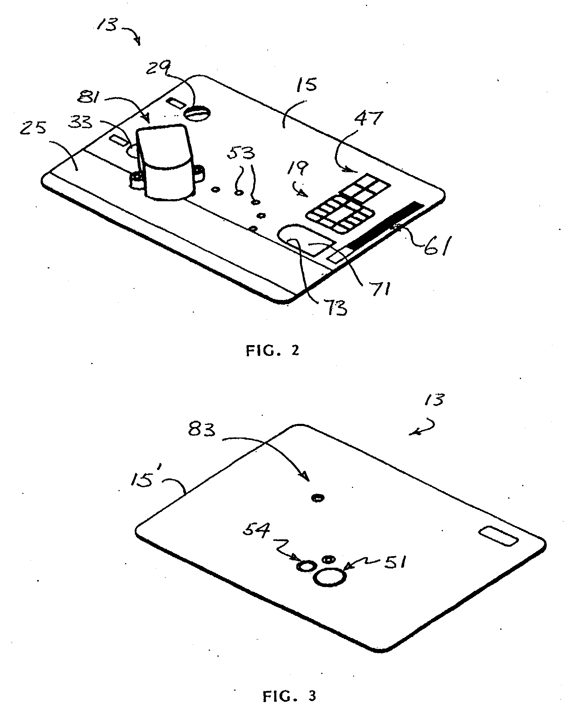

As further seen in FIG. 1, card 13 also includes a voice recognition structure 41 designed for having a person record audible information within card 13 and thereafter providing an audible output based on such recorded information. To achieve this, the voice recognition structure 41 includes a speaker 43 coupled to an adjacent, miniaturized printed circuit board 45 which in turn utilizes a small battery 47. In a preferred embodiment, the speaker, board and battery are all oriented in a planar orientation and retained between parts 15 and 15', as clearly seen in comparing FIGS. 2 and 3. In FIG. 3, there is shown the bottom (or under) side of card 13 and as seen therein, there is provided a button 51 electrically coupled to the speaker which the card user activates to engage speaker 43, which in turn provides its audible message through mating apertures 53 spacedly located within upper part 15. To record information, the card user depresses button 54 located conveniently adjacent button 51, said button 54 electrically coupled to the voice recognition structure.

As further seen in FIG. 1, card 13 may also include a bar code 61 which is located on surface 17 adjacent stripe 25. This bar code may be a permanent structure (e.g., etched or permanent ink) or of temporary configuration and thus removable. The bar code 61 may act as a backup for the magnetic stripe 25 and may also function as a primary component (e.g., as a house key), if utilized with an appropriate, corresponding bar code reader. Several such readers are known in the art and further description is not believed necessary.

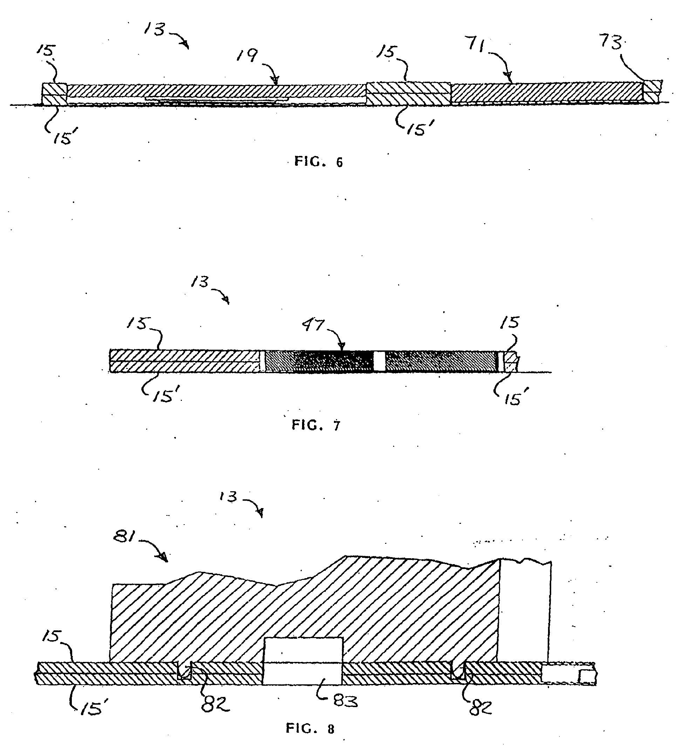

Card 13 further includes a fingerprint identification member 71 which is located within the card's body portion and exposed through a corresponding opening 73 in the upper part 15 (FIG. 6). This fingerprint structure allows for the provision of a permanent (e.g., etched) fingerprint of the card user to be formed thereon for subsequent identification purposes, e.g., to assure card ownership. The fingerprint structure can also be provided by ink or similar material of a less permanent nature. In a preferred embodiment, the fingerprint itself is eventually preferably read by a laser or similar member, such readers available on the market. The substrate for member 71 can be glass or similar material. This structure is also shown in FIG. 6.

Finally, card 13 is also shown in FIG. 1 as including a miniature camera 81 designed for being removably attached to the upper surface 17 of part 15. Camera 81 is also seen in FIG. 8, on a much enlarged scale. The camera is preferably mounted by a series of frictional pins 82 or the like and, significantly, aligns with a corresponding opening 83 provided within the lower part 15' of the card's body portion. This opening is also seen in FIG. 3. Thus, light or other information passes through opening 83 to the removable camera, if the card user desires to utilize such a camera as part of this card operation. The camera is easily removable for user storage in a separate location to thus assure the overall thinness of the final card structure, e.g., should the user desire to carry such card in a purse, wallet or similar space-saving location.

While there have been shown and described what are at present the preferred embodiments of the invention, it will obvious to those skilled in the art that various changes and modifications may be made therein without departing from the scope of the invention which is defined by the appended claims.

## Claims

1. An electronic card (13) comprising:
a thin body portion (15,15') including a first external surface (17);
a storage device (19) located substantially within said body portion (15,15'); and
an antenna (21) located in said first external surface (17) or substantially within said body portion (15,15').

2. The electronic card (13) of claim 1 wherein said storage device (19) comprises a semiconductor chip (23).

3. The electronic card (13) of claim 2 wherein said semiconductor chip (23) is adapted for receiving a first series of electronic signals and thereafter generating a second series of electronic signals in response to said first series of signals.

4. An electronic card (13) comprising:
a thin body portion (15,15') including a first external surface (17);
a recording device located substantially within said body portion (15,15'); and
an antenna (21) located on said first external surface (17) or substantially within said body portion (15,15').

5. The electronic card (13) of claim 4 wherein said recording device comprises a magnetic stripe (25) located on said first external surface (17).

6. The electronic card (13) of claim 5 wherein said magnetic stripe (25) comprises a pattern of ferromagnetic material adapted for being read by an appropriate decoding apparatus.

7. The electronic card (13) of any one of the preceding claims further including a voice recording assembly (41) located substantially within said body portion (15,15').

8. The electronic card (13) of claim 7 further including a battery (47) located substantially within said body portion (15,15') and operatively connected to said voice recording assembly (41) for providing power thereto.

9. The electronic card (13) of claim 7 or 8 further including a speaker (43) located substantially within said body portion (15,15') for providing audible messages from said voice recording assembly (41).

10. The electronic card (13) of any one of the preceding claims further including an activatable CD-Rom (31) located substantially within said body portion (15,15').

11. The electronic card (13) of any one of the preceding claims further including an activated floppy disk (27) located substantially within said body portion (15,15').

12. The electronic card (13) of any one of the preceding claims further including a bar code (61) located on said first external surface (17) of said body portion (15,15').

13. The electronic card (13) of any one of the preceding claims further including a camera (81) removably secured to said first external surface (17) of said body portion (15,15').
